# EUROPEAN PATENT SPECIFICATION

(11) **EP 3 412 142 B1**
(45) Date of publication and mention of the grant of the patent: **09.09.2020**
(21) Application number: 16889215.6
(22) Date of filing: 01.02.2016
(51) Int. Cl.: A01K 1/015

(54) **METHOD FOR MANUFACTURING A WATER-ABSORBING MATERIAL**
VERFAHREN ZUR HERSTELLUNG EINES WASSERABSORBIERENDEN BEHANDLUNGSMATERIALS
PROCÉDÉ DE FABRICATION D'UN MATÉRIAU DE TRAITEMENT ABSORBANT L'EAU

(43) Date of publication of application: 12.12.2018
(73) Proprietor: Daiki Co., Ltd., Minato-ku Tokyo 107-0052 (JP)
(72) Inventor: ITO, Hiroshi, Tokyo 107-0052 (JP); YOSHINAGA, Junji, Tokyo 107-0052 (JP); HATANAKA, Shinobu, Tokyo 107-0052 (JP); MASUYAMA, Takuya, Tokyo 107-0052 (JP); HOSOYA, Takahiro, Tokyo 107-0052 (JP)
(74) Representative: Müller-Boré & Partner Patentanwälte PartG mbB
(86) International application number: PCT/JP2016/052902
(87) International publication number: WO 2017/134725

(56) References cited:
- JP-A- H0 799 857
- JP-A- S6 485 025
- JP-A- S63 245 625
- JP-A- 2001 299 121
- JP-A- 2004 242 554
- JP-A- 2015 097 505
- JP-A- 2015 097 505
- JP-A- 2015 097 996
- US-A1- 2008 318 762

## Description

### Technical Field

The present invention relates to a water absorption treatment material that absorbs human or animal excrement and other liquids and a method for manufacturing the water absorption treatment material.

### Background Art

Patent Document 1 discloses an excrement treatment material, which is a type of water absorption treatment material. This excrement treatment material is provided with a core layer that contains fibers and a skin layer that covers the core layer. The skin layer contains an α-starch and fibers.

Patent Document 1 states that an advantage of this excrement treatment material is that the excrement treatment material can be flushed down a flush toilet with peace of mind. Patent Document 2 discloses a method for manufacturing a straw mulching substitute in the form of foamed granulated materials. Water is used as the foaming agent and is introduced to the absorbent material.

Patent Document 3 discloses a water absorption treatment material that absorbs liquid comprising foamed particulate materials. In one embodiment, citric acid and sodium bicarbonate are added in a solid form to an aqueous slurry of the absorbent components.

Patent Document 4 discloses water absorption materials having a granular core and a coating layer, which are collapsing when absorbing liquids.

### Citation List

### Patent Document

Patent Document 1: JP 2010-104383A
Patent Document 2: JP2001-299121A
Patent Document 3: US2008/0318762
Patent Document 4: JP 2015-097505A

### Summary of Invention

### Technical Problem

However, in order to dispose of the used water absorption treatment material by flushing the water absorption treatment material down a flush toilet, it is necessary that the water absorption treatment material has sufficient water disintegrability (the property of being able to disperse in water due to fibers and particles that are bound together quickly separating upon contact with water). If the water disintegrability of the water absorption treatment material is insufficient, the water absorption treatment material may clog the toilet. In this respect, conventional water absorption treatment materials have room for improvement in terms of water disintegrability.

The present invention was made in view of the above-described problem, and it is an object thereof to provide a method for manufacturing a water absorption treatment material that has excellent disintegrability.

### Solution to Problem

A water absorption treatment material which is described is a water absorption treatment material that absorbs a liquid, the water absorption treatment material including a granule that contains a reacted foaming agent, wherein gas bubbles that have been produced as a result of a reaction of the foaming agent are present in the granule.

In this water absorption treatment material, the reacted foaming agent is contained in the granule. The gas bubbles that have been produced during the reaction of the foaming agent are present in the granule. Due to the gas bubbles, pores are formed in the granule, and therefore, the granule has a structure that can easily collapse. Thus, a water absorption treatment material with excellent water disintegrability can be realized.

A method for manufacturing a water absorption treatment material according to the present invention is a method for manufacturing a water absorption treatment material that absorbs a liquid, the method including a water addition step of adding an aqueous solution containing a foaming agent to a material to be granulated, and a granulating step of granulating the material to be granulated to which the aqueous solution is added and thereby forming a granule The foaming agent is reacted in the aqueous solution before the aqueous solution is added to the material to be granulated.

In this manufacturing method, prior to granulation of the material to be granulated, the aqueous solution containing the foaming agent is added to the material to be granulated. Thus, a granule that has gas bubbles inside can be obtained, the gas bubbles being produced as a result of the reaction of the foaming agent. Due to the gas bubbles, pores are formed in the granule, and therefore, the granule has a structure that can easily collapse. Thus, a water absorption treatment material with excellent water disintegrability can be manufactured.

### Advantageous Effects of Invention

According to the present invention, a method for manufacturing a water absorption treatment material that has excellent water disintegrability can be realized.

### Brief Description of Drawings

FIG. 1 is a schematic diagram showing a water absorption treatment material which has been obtained according to a first embodiment of the present invention.
FIG. 2 is a diagram for illustrating a change that occurs when the water absorption treatment material in FIG. 1 absorbs a liquid.
FIG. 3 is a schematic diagram showing a water absorption treatment material which has been obtained according to a second embodiment of the present invention.
FIG. 4 is a schematic diagram showing a water absorption treatment material according to a modification.

### Description of Embodiments

Hereinafter, embodiments of the present invention will be described in detail with reference to the drawings. It should be noted that the description of the drawings denotes like elements with like reference numerals and omits redundant descriptions.

### (First Embodiment)

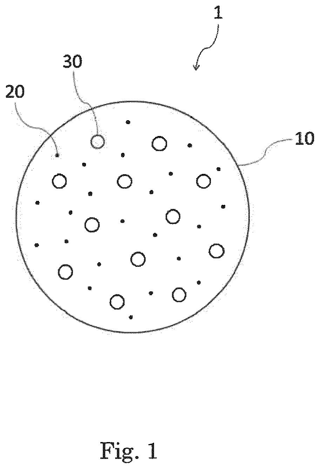

FIG. 1 is a schematic diagram showing a water absorption treatment material which has been obtained according to a first embodiment of the present invention. A water absorption treatment material 1 is a water absorption treatment material that absorbs a liquid, and includes a granule 10. The water absorption treatment material 1 is, for example, an excrement treatment material for pet animals such as cats and dogs.

The granule 10 has the function of absorbing and retaining a liquid such as urine. The granule 10 has a granular shape. Examples of the shape of the granule 10 include a sphere, an ellipse, and a cylinder. The granule 10 contains paper as the main material. Here, "paper being the main material of the granule 10" means that the paper accounts for the highest weight ratio in all of the materials that constitute the granule 10. Examples of the paper include ordinary paper as well as a vinyl chloride wallpaper classified product (paper obtained through classification of vinyl chloride wallpaper), a disposable diaper classified product (paper obtained through classification of disposable diapers), a paper napkin classified product (paper obtained through classification of paper napkins), a fluff pulp, a papermaking sludge, and a pulp sludge. Note that, since it is difficult to completely remove materials other than paper through classification, it is normal that materials other than paper remain in the vinyl chloride wallpaper classified product, the disposable diaper classified product, and the paper napkin classified product to some extent.

The above-described paper is pulverized to a particle size (fiber length) of 1 mm or less. That is to say, the paper is obtained through pulverization using a pulverizer with a screen having an aperture size of 1 mm or less. The particle size of the paper is preferably 0.5 mm or less, and more preferably 0.3 mm or less.

The granule 10 contains an adhesive material (first adhesive material) that exhibits viscosity upon absorbing water. Examples of the adhesive material include dextrin, starch, CMC (carboxymethyl cellulose), PVA (polyvinyl alcohol), and a water-absorbent polymer. Preferably, the water-absorbent polymer has a mean particle size of 20 µm or less. The mean particle size as used herein refers to the smallest aperture size through which 50 wt% or more of particles can pass when the water-absorbent polymer, which is an aggregate of a large number of particles, is sieved. Therefore, "having a mean particle size of 20 µm or less" means that when the water-absorbent polymer is sieved using a sieve with an aperture size of 20 µm, 50 wt% or more of the particles can pass through the sieve. In the present embodiment, dextrin is used as the first adhesive material. Preferably, the weight ratio of the first adhesive material in the granule 10 is 10% or more and less than 30%.

The granule 10 contains a reacted foaming agent 20. A foaming agent refers to a substance that produces bubbles as a result of a chemical reaction such as thermal decomposition. In the present embodiment, sodium hydrogen carbonate is used as the foaming agent. Upon the sodium hydrogen carbonate undergoing a reaction (thermal decomposition), it changes to sodium carbonate while producing carbon dioxide and water. Therefore, in the present embodiment, the reacted foaming agent 20 is sodium carbonate. Gas bubbles 30 that have been produced as a result of the reaction of the foaming agent are present in the granule 10. The granule 10 that contains the reacted foaming agent 20 as described above can be formed by granulating, for example, a material to be granulated to which an aqueous solution containing the foaming agent is added.

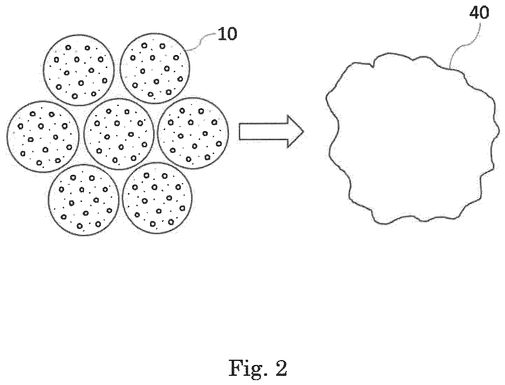

The granule 10 is configured to collapse once the water absorption treatment material 1 absorbs a liquid. As used herein, "the granule 10 collapsing" means that the granule 10 breaks up to such an extent that its granular shape can no longer be maintained. The water absorption treatment material 1 is used in a state in which a plurality of granules 10 are spread out in an animal toilet or the like. As shown in FIG. 2, a plurality of granules 10 that have collapsed upon being exposed to a liquid such as urine mix together to form a mixture 40, which is a sludgy mass. In this mixture 40, the individual granules 10 can no longer be distinguished from one another.

The method for manufacturing the water absorption treatment material 1 will be described as a first embodiment of the method for manufacturing a water absorption treatment material according to the present invention. First, a material (material to be granulated) that the granule 10 is to be composed of is pulverized to a predetermined size using a pulverizer, and the pulverized material to be granulated is placed in a mixer at a predetermined rate, and mixed.

Then, water is added to the material to be granulated. An aqueous solution containing a foaming agent (aqueous solution of sodium hydrogen carbonate in the present embodiment) is used as the water to be added at this time. That is to say, the addition of water to the material to be granulated is performed by adding the aqueous solution to the material to be granulated (water addition step). The concentration (concentration by weight percent) of the aqueous solution at this time is preferably 5% or more. Moreover, when the weight of the material to be granulated is taken as 1, the weight of the aqueous solution that is added to the material to be granulated is preferably 0.9 or less, and more preferably 0.6 or less.

In the water addition step, the foaming agent is reacted in the aqueous solution before the aqueous solution is added to the material to be granulated. For example, it is conceivable to heat the aqueous solution before adding the aqueous solution to the material to be granulated. In this case, it is preferable to heat the aqueous solution until it boils.

Next, the material to be granulated to which the aqueous solution has been added is granulated to thereby form granules 10 (granulating step). At this time, in order to obtain granules 10 that can easily collapse upon absorbing a liquid, it is preferable to reduce the compressive force that is applied to the material to be granulated during granulation. For example, the compressive force applied to the material to be granulated can be reduced by reducing the thickness of a die of a granulator.

Subsequently, the granules 10 that have been produced through the prior steps are sieved using a sieve with a predetermined mesh size (sizing step). Thus, only the granules 10 that satisfy a predetermined standard are extracted. Then, the granules 10 that have been extracted in the prior step are heated using a dryer to thereby dry the granules 10 (drying step). The water content of the granules 10 is adjusted as appropriate through drying. Thus, it is possible to prevent the occurrence of mold and the like during storage of the water absorption treatment material 1. In the above-described manner, a water absorption treatment material 1 can be obtained.

The effects of the present embodiment will be described. In the water absorption treatment material 1, the granule 10 contains the reacted foaming agent 20. Also, the gas bubbles 30, which were generated in the reaction of the foaming agent, are present in the granule 10. Due to the gas bubbles 30, pores are formed in the granule 10, and the granule 10 therefore has a structure that can easily collapse. Thus, a water absorption treatment material 1 with excellent water disintegrability is realized.

The granule 10 is formed by granulating the material to be granulated to which the aqueous solution containing the foaming agent has been added. That is to say, prior to granulation of the material to be granulated, the aqueous solution containing the foaming agent is added to the material to be granulated. Thus, a granule 10 that has gas bubbles 30 inside can be easily obtained.

In the water addition step, since the foaming agent is reacted in the aqueous solution before the aqueous solution is added to the material to be granulated, the aqueous solution that is bubbling will be added to the material to be granulated. Thus, a granule 10 that has a large amount of gas bubbles 30 inside can be obtained. If the aqueous solution is heated before the aqueous solution is added to the material to be granulated, the reaction of the foaming agent can be accelerated.

It is also conceivable to increase the amount of water that is added to the material to be granulated, as another method for generating a large number of gas bubbles in the granule 10. That is to say, as a result of drying the granule in the drying step, water contained in the granule evaporates, and gas bubbles are formed at portions where the water has evaporated. Therefore, it is possible to generate a large amount of gas bubbles in the dried granule by increasing the amount of water that is added to the material to be granulated and thereby forming the granule that has a large water content. However, if the amount of water that is added to the material to be granulated is increased as described above, a problem arises in that the time required for drying increases. Moreover, there is another problem in that if an excessively large amount of water is added, it is difficult to granulate the material to be granulated, which results in difficulty in forming the granule 10 that has a granular shape.

In this respect, according to the present embodiment, the aqueous solution containing the foaming agent is added to the material to be granulated. With this method, it is possible to generate a large amount of gas bubbles in the granule 10 without increasing the amount of water that is added to the material to be granulated. Thus, water that is used in the water addition step can be saved, and the time required for drying can be shortened. This contributes to a reduction in utility costs and hence a reduction in the manufacturing cost of the water absorption treatment material 1.

From the standpoint of suppressing the amount of water that is added as described above, when the weight of the material to be granulated is taken as 1, the weight of the aqueous solution that is added to the material to be granulated is preferably 0.9 or less, and more preferably 0.6 or less.

In the drying step, the granule 10 that has been formed in the granulating step is heated to thereby dry the granule 10. Heating at this time can stimulate the unreacted foaming agent to react. Thus, an even larger amount of gas bubbles 30 can be generated in the granule 10.

In the present embodiment, sodium hydrogen carbonate is used as the foaming agent. Sodium carbonate that is obtained as a result of the reaction of sodium hydrogen carbonate expresses relatively high alkalinity. This causes a flavonoid pigment in dextrin to change color to yellow, and thus, yellowish granule 10 is obtained. This contributes to improvement in the aesthetic appearance of the granule 10 and hence the water absorption treatment material 1. Furthermore, once the granule 10 has absorbed a liquid, their yellowish color becomes lighter, and therefore, a water absorption treatment material 1 that changes color before and after use can be advantageously obtained without the need to add a coloring material.

The granule 10 collapses during use of the water absorption treatment material 1. That is to say, the granule 10 is configured to collapse once the water absorption treatment material 1 absorbs a liquid such as urine. Thus, compared with a case where the granule 10 does not collapse even after use (the granular shape of the granule 10 is maintained), the water disintegrability of the water absorption treatment material 1 can be improved.

The granule 10 contains paper as the main material. Paper is a material with excellent water-absorbing properties and water-retaining properties. However, in conventional water absorption treatment materials that contain paper as the main material, relatively long fibers (pulp) that constitute the paper are entangled and are unlikely to come apart, and this is a factor that prevents an improvement in water disintegrability. In this respect, according to the present embodiment, as described above, the gas bubbles 30 are generated in the granule 10 using the foaming agent, and the granule 10 with a structure that can easily collapse is thereby obtained. Thus, it is possible to realize a water absorption treatment material 1 with excellent water disintegrability while using paper as the main material.

The above-described paper is pulverized to a particle size of 1 mm or less. As a result of finely pulverizing the paper as described above, fibers constituting the paper are likely to come apart, and the water disintegrability of the water absorption treatment material 1 can be improved. From this point of view, the paper is preferably pulverized to a particle size of 0.5 mm or less, and more preferably pulverized to a particle size of 0.3 mm or less.

The granule 10 contains an adhesive material. Thus, during use of the water absorption treatment material 1, the bonding strength of the mixture 40, which is constituted by a plurality of granules 10, can be increased. In particular, in the present embodiment, the mixture 40 is formed in a state in which each granule 10 has collapsed, and therefore, the adhesive material is likely to penetrate the entire mixture 40. Thus, even when the adhesive material content is small, a mixture 40 with a sufficient bonding strength can be obtained. Adhesive materials are relatively expensive. Therefore, a reduction in the amount of adhesive material that is used contributes to a reduction in the manufacturing cost of the water absorption treatment material 1. From this point of view, the weight ratio of the adhesive material in the granule 10 is preferably less than 30%. On the other hand, if the content of the adhesive material is excessively small, a sufficient bonding strength will not be obtained. From this point of view, the weight ratio of the adhesive material in the granule 10 is preferably 10% or more.

In order to confirm the effects of the present embodiment, a water absorption treatment material 1 was actually manufactured using the above-described manufacturing method. Note that a material constituted by 80 wt% paper and 20 wt% dextrin was used as the material to be granulated. Spoilage that was pulverized using a pulverizer with a screen that had an aperture size of 0.3 mm was used as the paper. The concentration (concentration by weight percent) of an aqueous solution of sodium hydrogen carbonate that was added to the material to be granulated was set at 5%. Moreover, when the weight of the material to be granulated was taken as 1, the weight of the aqueous solution of sodium hydrogen carbonate that was added to the material to be granulated was 0.9.

Then, 20 ml of water was dropped onto the manufactured water absorption treatment material 1 (an aggregate of a large number of granules 10) using the container of a syringe. The granules 10 exposed to the water collapsed, and a sludgy mass was formed. This sludgy mass was placed in a beaker (capacity: 1000 ml) containing 600 ml of water, and the mass instantaneously dispersed in water. Note that the mass was placed in the beaker in a state in which a water current was generated in the beaker using a magnetic stirrer. The rotational speed of the magnetic stirrer was set at about 450 rpm.

### (Second Embodiment)

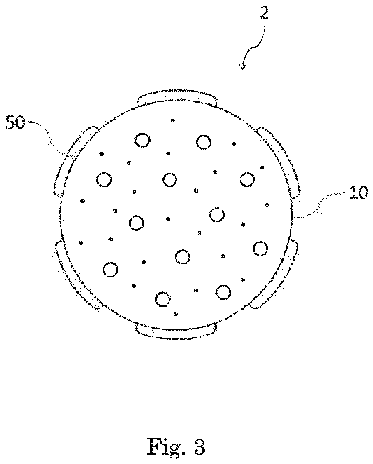

FIG. 3 is a schematic diagram showing a water absorption treatment material which has been obtained according to a second embodiment of the present invention. A water absorption treatment material 2 is a water absorption treatment material that absorbs a liquid, and includes a coating layer portion 50 in addition to the granule 10. The granule 10 is configured as described above in the first embodiment.

The coating layer portion 50 covers the granule 10. The coating layer portion 50 is a portion that covers at least a portion of the surface of the granule 10. In the present embodiment, the coating layer portion 50 covers only a portion of the surface of the granule 10. The weight ratio of the coating layer portion 50 in the whole of the granule 10 and the coating layer portion 50 is preferably 1% or more and less than 13%. Paper, for example, can be used as the main material of the coating layer portion 50 as well. However, it is preferable that the paper that is used as the main material of the coating layer portion 50 is composed mainly of a virgin pulp.

The coating layer portion 50 contains an adhesive material (second adhesive material) that exhibits viscosity upon absorbing water. The same adhesive material as the above-described first adhesive material may be used as the second adhesive material, or a different adhesive material may be used. In the present embodiment, a water-absorbent polymer that has a mean particle size of 20 µm or less is used as the second adhesive material.

Upon the water absorption treatment material 2 absorbing a liquid, the granule 10 as well as the coating layer portion 50 collapses. The granule 10 and the coating layer portion 50 that have collapsed mix together and form a sludgy mass.

The method for manufacturing the water absorption treatment material 2 will be described as a second embodiment of the method for manufacturing a water absorption treatment material according to the present invention. First, granules 10 are formed using the method described in the first embodiment. Next, a material (coating material) that the coating layer portion 50 is to be composed of is made to adhere to the surface of each granule 10 to thereby form the coating layer portions 50 (coating step). At this time, water is not added to the granules 10. That is to say, in the present embodiment, the coating material is made to adhere to the surface of each granule 10 without adding water to the granules 10. The coating material can be made to adhere to the surface of each granule 10 through sprinkling or spraying using a coating apparatus, for example. Then, the sizing step and the drying step are conducted, and thus, a water absorption treatment material 2 can be obtained.

The effects of the present embodiment will be described. In the water absorption treatment material 2, the coating layer portion 50, which contains the adhesive material, is formed. Thus, the bonding strength of a mixture that is formed during use of the water absorption treatment material 2 can be increased.

In the water absorption treatment material 2, both the granule 10 and the coating layer portion 50 collapse. For this reason, both the viscosity of the granule 10 and the viscosity of the coating layer portion 50 contribute to the formation of a mixture. Therefore, the water absorption treatment material 2 is advantageous in terms of bonding strength, compared with a conventional water absorption treatment material in which only the viscosity of coating layer portion contributes to agglomeration.

In this manner, in the water absorption treatment material 2, the granule 10 and the coating layer portion 50 combine to contribute to the formation of a mixture, and therefore, a sufficient bonding strength can be obtained even when the ratio of the coating layer portion 50 is small. A reduction in the ratio of the coating layer portion 50 contributes to a reduction in the cost of procuring materials and hence the manufacturing cost of the water absorption treatment material 2. From this point of view, the weight ratio of the coating layer portion 50 in the whole of the granule 10 and the coating layer portion 50 is preferably less than 13%. On the other hand, if the ratio of the coating layer portion 50 is excessively small, the effect of the coating layer portion 50 of increasing the bonding strength will not be sufficiently provided. From this point of view, it is preferable that the weight ratio of the coating layer portion 50 in the whole of the granule 10 and the coating layer portion 50 is 1% or more.

The coating layer portion 50 covers only a portion of the surface of the granule 10. In other words, the other portion of the surface of the granule 10 is exposed without being covered by the coating layer portion 50. Thus, during use of the water absorption treatment material 2, the granule 10 can quickly absorb a liquid. This is advantageous in increasing the collapsibility of the granule 10.

The coating layer portion 50 contains a water-absorbent polymer as the adhesive material. Water absorbent polymers have the property of swelling upon absorbing a liquid, and the swollen water-absorbent polymer in the coating layer portion 50 prevents the liquid from reaching the granule 10. Thus, swelling of the water-absorbent polymer may decrease the collapsibility of the granule 10 and hence the water disintegrability of the water absorption treatment material 2. In this respect, swelling of the water-absorbent polymer upon absorbing a liquid can be suppressed by finely pulverizing the water-absorbent polymer. Accordingly, in order to suppress swelling of the water-absorbent polymer, the mean particle size of the water-absorbent polymer contained in the coating layer portion 50 is preferably 20 µm or less, and more preferably 10 µm or less.

In the coating step, the coating material is made to adhere to the surface of the granule 10 without adding water to the granule 10. Thus, it is possible to prevent more coating material than is necessary from adhering to the surface of the granule 10. Moreover, the manufacturing process of the water absorption treatment material 2 can be simplified by omitting the water addition step. Note that, even when the water addition step is omitted as described above, water that is contained in the granule 10 can account for the water that is necessary for adhesion of the coating material.

If paper that is composed mainly of a virgin pulp is used as the main material of the coating layer portion 50, the aesthetic appearance of the water absorption treatment material 2 can be enhanced compared with the case where paper that is composed mainly of a wastepaper pulp is used. The other effects of the present embodiment are as described above in the first embodiment.

The water absorption treatment material and the method for manufacturing the water absorption treatment material according to the present invention are not limited to the foregoing embodiments, and various modifications can be made. In the foregoing embodiments, the foaming agent composed of sodium hydrogen carbonate has been described as an example. However, a foaming agent composed of sodium hydrogen carbonate and citric acid may also be used. In this case, the reaction of the foaming agent can be accelerated even at normal temperature. Moreover, sodium lauryl sulfate, ammonium carbonate, or the like may be used for the foaming agent.

In the foregoing embodiments, paper has been described as an example of the main material of the granule 10. However, water-absorbent materials other than paper may also be used as the main material of the granule 10. Examples of such water-absorbent materials include plastics or used tea leaves. The same applies to the main material of the coating layer portion 50.

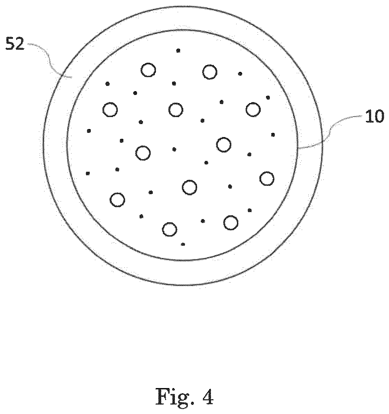

In the foregoing embodiments, a case where only a portion of the surface of the granule 10 is covered by the coating layer portion 50 has been described. However, as shown in FIG. 4, the surface of the granule 10 may be entirely covered by a coating layer portion 52. The configuration of the coating layer portion 52 is the same as that of the coating layer portion 50 except that the coating layer portion 52 covers the entire surface of the granule 10.

### List of Reference Numerals

- 1: Water Absorption Treatment Material
- 2: Water Absorption Treatment Material
- 10: Granule
- 20: Reacted Foaming Agent
- 30: Gas Bubble
- 40: Mixture
- 50: Coating Layer Portion
- 52: Coating Layer Portion

## Claims

1. A method for manufacturing a water absorption treatment material that absorbs a liquid, the method comprising:
a water addition step of adding an aqueous solution containing a foaming agent to a material to be granulated; and
a granulating step of granulating the material to be granulated to which the aqueous solution is added and thereby forming a granule,
wherein, in the water addition step, before the aqueous solution is added to the material to be granulated, the foaming agent is reacted in the aqueous solution.

2. The method for manufacturing a water absorption treatment material according to claim 1,
wherein, in the water addition step, before the aqueous solution is added to the material to be granulated, the aqueous solution is heated.

3. The method for manufacturing a water absorption treatment material according to claim 1 or 2,
wherein, when a weight of the material to be granulated is taken as 1, a weight of the aqueous solution that is added to the material to be granulated in the water addition step is 0.9 or less.

4. The method for manufacturing a water absorption treatment material according to claim 3,
wherein, when the weight of the material to be granulated is taken as 1, the weight of the aqueous solution that is added to the material to be granulated in the water addition step is 0.6 or less.

5. The method for manufacturing a water absorption treatment material according to any one of claims 1 to 4, the method further comprising:
a drying step of heating the granule formed in the granulating step and thereby drying the granule.

6. The method for manufacturing a water absorption treatment material according to any one of claims 1 to 5, the method further comprising:
a coating step of making a coating material adhere to a surface of the granule formed in the granulating step and thereby forming coating layer portion that covers the granule.

7. The method for manufacturing a water absorption treatment material according to claim 6,
wherein, in the coating step, the coating layer portion is formed so as to cover only a portion of the surface of the granule.

8. The method for manufacturing a water absorption treatment material according to claim 6 or 7,
wherein, in the coating step, the coating material is made to adhere to the surface of the granule without adding water to the granule.

## Patentansprüche

1. Verfahren zum Herstellen eines Wasserabsorptionsbehandlungsmaterials, das eine Flüssigkeit absorbiert, wobei das Verfahren umfasst:
einen Wasserzugabeschritt des Zugebens einer wässrigen Lösung, die ein Schaummittel enthält, zu einem zu granulierenden Material; und
einen Granulierungsschritt zum Granulieren des zu granulierenden Materials, zu dem die wässrige Lösung gegeben wird, und dadurch Bilden eines Granulats;
wobei in dem Wasserzugabeschritt, bevor die wässrige Lösung zu dem zu granulierenden Material gegeben wird, das Schaummittel in der wässrigen Lösung umgesetzt wird.

2. Verfahren zum Herstellen eines Wasserabsorptionsbehandlungsmaterials nach Anspruch 1,
wobei in dem Wasserzugabeschritt, bevor die wässrige Lösung zu dem zu granulierenden Material gegeben wird, die wässrige Lösung erhitzt wird.

3. Verfahren zum Herstellen eines Wasserabsorptionsbehandlungsmaterials nach Anspruch 1 oder 2,
wobei, wenn ein Gewicht des zu granulierenden Materials als 1 angenommen wird, ein Gewicht der wässrigen Lösung, die dem zu granulierenden Material in dem Wasserzugabeschritt zugegeben wird, 0,9 oder weniger beträgt.

4. Verfahren zum Herstellen eines Wasserabsorptionsbehandlungsmaterials nach Anspruch 3,
wobei, wenn das Gewicht des zu granulierenden Materials als 1 angenommen wird, das Gewicht der wässrigen Lösung, die dem zu granulierenden Material in dem Wasserzugabeschritt zugegeben wird, 0,6 oder weniger beträgt.

5. Verfahren zum Herstellen eines Wasserabsorptionsbehandlungsmaterials nach einem der Ansprüche 1 bis 4, wobei das Verfahren ferner umfasst:
einen Trocknungsschritt des Erhitzens des in dem Granulierungsschritt gebildeten Granulats und dadurch Trocknen des Granulats.

6. Verfahren zum Herstellen eines Wasserabsorptionsbehandlungsmaterials nach einem der Ansprüche 1 bis 5, wobei das Verfahren ferner umfasst:
einen Beschichtungsschritt, bei dem ein Beschichtungsmaterial an einer Oberfläche des in dem Granulierungsschritt gebildeten Granulats angehaftet wird und dadurch ein Beschichtungsschichtabschnitt gebildet wird, der das Granulat bedeckt.

7. Verfahren zum Herstellen eines Wasserabsorptionsbehandlungsmaterials nach Anspruch 6,
wobei in dem Beschichtungsschritt der Beschichtungsschichtabschnitt so ausgebildet wird, dass er nur einen Abschnitt der Oberfläche des Granulats bedeckt.

8. Verfahren zum Herstellen eines Wasserabsorptionsbehandlungsmaterials nach Anspruch 6 oder 7,
wobei in dem Beschichtungsschritt das Beschichtungsmaterial dazu gebracht wird, an der Oberfläche des Granulats zu haften, ohne dem Granulat Wasser zuzusetzen.

## Revendications

1. Procédé de fabrication d'une matière de traitement par absorption d'eau qui absorbe un liquide, le procédé comprenant:
une étape d'addition d'eau où l'on ajoute une solution aqueuse contenant un agent moussant à une matière à granuler; et
une étape de granulation où l'on granule la matière à granuler à laquelle l'agent moussant est ajouté et l'on forme ainsi un granule,
dans lequel, à l'étape d'addition d'eau, avant que la solution aqueuse ne soit ajoutée à la matière à granuler, l'agent moussant est mis à réagir dans la solution aqueuse.

2. Procédé de fabrication d'une matière de traitement par absorption d'eau selon la revendication 1,
dans lequel, à l'étape d'addition d'eau, avant que la solution aqueuse ne soit ajoutée à la matière à granuler, la solution aqueuse est chauffée.

3. Procédé de fabrication d'une matière de traitement par absorption d'eau selon la revendication 1 ou 2,
dans lequel, quand le poids de la matière à granuler est prise en tant que 1, le poids de la solution aqueuse qui est ajoutée à la matière à granuler dans l'étape d'addition d'eau, est de 0,9 ou moins.

4. Procédé de fabrication d'une matière de traitement par absorption d'eau selon la revendication 3,
dans lequel, quand le poids de la matière à granuler est prise en tant que 1, le poids de la solution aqueuse qui est ajoutée à la matière à granuler dans l'étape d'addition d'eau, est de 0,6 ou moins.

5. Procédé de fabrication d'une matière de traitement par absorption d'eau selon l'une quelconque des revendications 1 à 4, le procédé comprenant en outre:
une étape de séchage où l'on chauffe le granule formé à l'étape de granulation, séchant ainsi le granule.

6. Procédé de fabrication d'une matière de traitement par absorption d'eau selon l'une quelconque des revendications 1 à 5, le procédé comprenant en outre:
une étape de revêtement où l'on fait en sorte qu'une matière de revêtement adhère à la surface du granulé formé à l'étape de granulation et où l'on forme ainsi une partie de couche de revêtement qui recouvre le granule.

7. Procédé de fabrication d'une matière de traitement par absorption d'eau selon la revendication 6,
dans lequel, à l'étape de revêtement, la partie de couche de revêtement est formée de manière à ne recouvrir qu'une partie de la surface du granule.

8. Procédé de fabrication d'une matière de traitement par absorption d'eau selon la revendication 6 ou 7,
dans lequel, à l'étape de revêtement, on fait que la matière de revêtement adhère à la surface du granule sans addition d'eau au granule.
